# EUROPÄISCHE PATENTSCHRIFT

(11) **EP 0 349 918 B1**
(45) Veröffentlichungstag und Bekanntmachung des Hinweises auf die Patenterteilung: **20.01.1993**
(21) Anmeldenummer: 89111952.1
(22) Anmeldetag: 30.06.1989
(51) Int. Cl.: B60N 2/08

(54) **Verstellschienenanordnung, insbesondere für PKW-Sitze**
Slide rail arrangement, especially for motor vehicle seats
Disposition de glissière, en particulier pour siège de voiture

(30) Priorität: 02.07.1988 DE 3822452
(43) Veröffentlichungstag der Anmeldung: 10.01.1990
(73) Patentinhaber: E.A. STORZ GMBH & CO. KG, D-78532 Tuttlingen (DE)
(72) Erfinder: Hafner, Franz, D-7204 Wurmlingen (DE); Pfeiffer, Thomas, D-7201 Seitingen-Oberflacht (DE)
(74) Vertreter: Hoeger, Stellrecht & Partner

(56) Entgegenhaltungen:
- DE-A- 3 046 160
- FR-A- 2 395 858
- GB-A- 2 188 543
- US-A- 3 507 472

## Beschreibung

Die Erfindung betrifft eine Verstellschienenanordnung für Kraftfahrzeugsitze und dgl. mit einer ortsfest montierbaren Aluminiumführungsschiene, mit einer Zahnleiste, mit durch Zahnelemente voneinander getrennten Rastöffnungen mit einer an einem Sitz montierbaren, durch die Führungsschiene geführten Gleitschiene und mit Arretiereinrichtungen, welche einen aus Stahl bestehenden Arretierhebel umfassen, der um eine quer zur Längsache oder um eine parallel zur Längsachse der Gleitschiene verlaufende Schwenkachse schwenkbar an der Gleitschiene befestigt ist, unter einer gegen die Zahnleiste gerichteten Federvorspannung steht und an seiner der Zahnleiste zugewandten Längskante mit abgewinkelten Zähnen versehen ist, die mit den Rastöffnungen der Zahnleiste verrastbar und durch Schwenken des Arretierhebels um eine Schwenkachse aus den Rastöffnungen heraus- und in diese hineinbewegbar sind, um Gleitschiene und Führungsschiene in durch die Zahnteilung der Zahnleiste und der Zähne des Arretierhebels vorgegebenen axialen Relativstellungen lösbar miteinander zu verrasten.

Dabei ergibt sich der Stand der Technik für die Variante mit quer zur Längsachse der Gleitschiene verlaufender Schwenkachse beispielsweise aus der DE-A-30 31 610, während sich der Stand der Technik für die Variante mit parallel zur Längsachse der Gleitschiene verlaufender Schwenkachse beispielsweise aus der GB-A-2 188 543 ergibt.

Allgemein sind derartige Verstellschienenanordnungen weit verbreitet und gestatten es dem Fahrer eines Kraftfahrzeugs oder dgl., den Fahrersitz bezüglich der Bedienelemente des Fahrzeugs in die für ihn günstigste Position zu bringen. In entsprechender Weise dienen die Sitzverstellungen bei Beifahrern und Passagieren dazu, die Einstellung einer möglichst bequemen Sitzhaltung zu ermöglichen. In allen Fällen muß dabei trotz der Verstellbarkeit der Sitze gewährleistet sein, daß diese auch bei extremen Belastungen, beispielsweise beim Frontalaufprall eines Kraftfahrzeugs, sicher in der eingestellten Lage gehalten werden, was bei den Verstellschienenanordnungen der betrachteten Art auch zuverlässig gewährleistet ist, da die Anzahl der kammartig ineinander greifenden Zähne der Zahnleiste einerseits und des Arretierhebels andererseits, die Materialstärke der Zähne und die am Arretierhebel wirksame Federvorspannung ein Herausspringen der Zähne des Arretierhebels aus der Zahnung der Zahnleiste zuverlässig verhindern.

Bei der Verwendung von Aluminium-Führungsschienen, deren Einsatz wegen ihres geringen Gewichts erwünscht ist und die mit hoher Präzision durch Strangpressen hergestellt werden können, hat es sich als nachteilig erwiesen, daß beim Verstellen des Sitzes durch den Kontakt zwischen dem bezüglich der Schwenkachse des Arretierhebels vordersten Zahn desselben und dem freien äußeren Rand der Zahnleiste der Aluminium-Führungsschiene mit der Zeit ein beträchtlicher Abrieb an der Zahnleiste entsteht, der einen schmierigen schwarzen Belag bildet, welcher bei Wartungs- und Reparaturarbeiten nur schlecht zu entfernen ist und die Gefahr einer Verschmutzung der Bekleidung und der Hände der Fahrzeugbenutzer mit sich bringt, wenn beispielsweise ein unter einen Sitz gefallener Gegenstand "im Dunkeln" tastend gesucht wird.

Der Erfindung liegt die Aufgabe zugrunde, den störenden Abrieb an der Aluminium-Führungsschiene bei Verstellschienenanordnungen der betrachteten Art zu verhindern oder doch auf ein Minimum zu reduzieren.

Diese Aufgabe wird gemäß einer ersten Variante der Erfindung dadurch gelöst, daß die Zahnelemente der Zahnleiste und/oder mindestens der der Schwenkachse am nächsten benachbarte vorderste Zahn des Arretierhebels in einem Kontaktbereich mit einem reibungsarmen Gleitbelag versehen ist.

Gemäß einer zweiten Variante der Erfindung wird die gestellte Aufgabe dadurch gelöst, daß die Zahnelemente der Zahnleiste und/oder die Zähne des Arretierhebels in einem Kontaktbereich mit einem reibungsarmen Gleitbelag versehen sind.

Bei Verstellschienenanordnungen für Kraftfahrzeugsitze und dergleichen ist zwar die Verwendung von Gleitelementen unterschiedlicher Art bereits bekannt; die vorbekannten Lösungen befassen sich jedoch sämtlich mit der Verringerung der Reibung zwischen den relativ zueinander verschieblichen Schienen, ohne zu berücksichtigen, daß auch bei der Betätigung der Arretiereinrichtungen ein Reibkontakt zwischen relativ zueinander beweglichen Teilen erfolgt und daß dieser Reibkontakt Verschleißerscheinungen zur Folge hat, die nicht nur zu einer Verschmutzung der Verstellschienenanordnung führen, sondern nach längerer Gebrauchszeit auch Funktionsstörungen zur Folge haben können, insbesondere wenn Abrieb von den relativ zueinander beweglichen Teilen zwischen die Schienen der Verstellschienenanordnung gerät und deren freie Verstellbarkeit relativ zueinander beeinträchtigt. So ist beispielsweise in der DE-A-27 02 576 eine Verstellschienenanordnung beschrieben, bei der die eine Schiene in einem Kontaktbereich, mit dem sie an der anderen Schiene anliegt, mit einem Gleitschuh aus hartem Material versehen ist. Andererseits sind die Elemente des zugehörigen Arretiermechanismus in konventioneller Weise und ohne einen reibungsarmen Gleitbelag ausgebildet. Dies gilt im wesentlichen auch für die Offenbarung der DE-A-25 45 763, gemäß welcher zwischen den Schienen einer Gleitschienenführung für Fahrzeugsitze Kunststoffgleitkörper angeordnet werden, ohne daß bezüglich der relativ zueinander beweglichen Elemente der Arretiereinrichtungen Schutzmaßnahmen gegen einen Verschleiß getroffen würden. Auch bei einer durch das DE-GM 19 06 369 bekannten Sitzführung für Kraftfahrzeugsitze dienen streifenförmige Gleitelemente aus Kunststoff lediglich der Verbesserung der Führung der Schienen sowie der störungsfreien Anordnung von Schraubenköpfen, ohne daß hinsichtlich der Arretiereinrichtungen Schutzmaßnahmen gegen einen erhöhten Verschleiß getroffen würden. In entsprechender Weise befaßt sich auch das DE-GM-70 16 740 lediglich mit einer vorteilhaften gleitverschieblichen Führung der Schienen, insbesondere der Führungsschienen für eine Schublade, wobei die vorgeschlagenen Gleitelemente jedoch aufgrund des Vorhandenseins eines weichen Gleitführungselementes nicht für eine Sitzschienenführung geeignet wären und wobei überdies auch keine Arretiereinrichtungen vorgesehen sind.

Der besondere Vorteil der erfindungsgemäßen Lösung besteht dagegen darin, daß ein reibungsarmer Gleitbelag an den Zahnelementen der Zahnleiste bzw. an mindestens einem Zahn des Arretierhebels in vielfältiger Weise preiswert und mit geringem technischen Aufwand angebracht werden kann und dann den unerwünschten Abrieb an der Aluminium-Führungsschiene wirksam verhindert, zumindest aber soweit verringert, daß bei normaler Benutzung der Verstelleinrichtungen auch über einen längeren Zeitraum hinweg kaum noch der störende schwarze Aluminiumstaub auftritt.

Was die vorteilhaften Möglichkeiten für die Anbringung eines Gleitbelags an den bei einem Verstellkontakt in Reibkontakt miteinander gelangenden Teilen der Verstellschienenanordnung anbelangt, so ergeben sich in vorteilhafter Ausgestaltung der Erfindung insbesondere folgende preislich und fertigungstechnisch vorteilhafte Möglichkeiten:
Auf die Zähne der Zahnleiste und/oder auf den mindestens einen Zahn des Arretierhebels kann jeweils eine Kunststoffkappe aufgesetzt werden, wobei ggf. für mehrere benachbarte Zähne ein durchgehendes Kunststoffteil vorgesehen werden kann. Die Kunststoffkappe bzw. das Kunststoffteil kann dabei an den Zähnen allein durch die Klemmwirkung eines elastisch verformbaren Kunststoffmaterials gehalten werden und/oder durch Verrasten geeigneter Rastelemente an den Kunststoffteilen einerseits, und den Zähnen bzw. der Zahnleiste und dem Arretierhebel andererseits. Zusätzlich oder stattdessen können die Kunststoffelemente auch an den Zähnen und/oder benachbarten Teilen der Zahnleiste bzw. des Arretierhebels unter Verwendung eines geeigneten Klebers festgeklebt werden.

Eine besonders vorteilhafte Möglichkeit besteht ferner darin, in die in Reibkontakt miteinander gelangenden Kontaktflächen schmale Kunststoffleisten einzusetzen, die ebenfalls wieder festgeklemmt und/oder verrastet und/oder verklebt sein können.

Eine weitere vorteilhafte Möglichkeit besteht darin, als Gleitbelag für die Zahnelemente der Zahnleiste und/oder mindestens einen Zahn des Arretierhebels eine lackartige Beschichtung vorzusehen, die in beliebiger, geeigneter Weise aufgebracht werden kann, insbesondere in Form einer Pulverbeschichtung.

Als Lacke für die Herstellung eines reibungsarmen Gleitbelags eignen sich dabei besonders Kunstharzlacke, die ggf. einen die Gleitwirkung verbessernden Füller enthalten können. Derartige Lacke können auf die sorgfältig entfetteten und gereinigten Zähne der Zahnleiste und des Arretierhebels durch Tauchlackierung aufgebracht werden, wobei das Kunstharzmaterial dadurch besonders sicher an den Zähnen festgelegt werden kann, daß in diesen durchgehende Bohrungen vorgesehen werden, in denen der einfließende Lack Sicherungsstege bildet. Die Sicherung der Lackschicht kann ferner durch eine entsprechende Oberflächenstruktur der Zähne, insbesondere durch in Profilrichtung verlaufende zahnförmige Riefen erreicht werden, wobei die gewünschte Form des Gleitbelags an den freien Stirnflächen der Zähne erfindungsgemäß dadurch erreicht werden kann, daß die Zähne unmittelbar nach dem Tauchen, d.h. solange der Kunstharzlack noch fließfähig ist, im wesentlichen senkrecht und mit den freien Stirnflächen nach unten gehaltert werden. Geeignete Gleitwerkstoffe bzw. -lacke sind beispielsweise in der DE-A-12 62 688 sowie in der DE-Z: Industrieanzeiger, Nr. 96 v. 27.11.1981, 103. Jg., Seite 29, beschrieben.

Weitere Einzelheiten und Vorteile der Erfindung werden nachstehend anhand von Zeichnungen noch näher erläutert. Es zeigen:
- Fig. 1: eine Seitenansicht einer bevorzugten Ausführungsform einer Verstellschienenanordnung gemäß der Erfindung im verrasteten Zustand;
- Fig. 2: eine Seitenansicht der Verstellschienenanordnung gemäß Fig. 1 im ausgerasteten Zustand;
- Fig. 3: einen Querschnitt durch die Verstellschienenanordnung gemäß Fig. 1 längs der Linie III-III in dieser Figur;
- Fig. 4: eine vergrößerte Teil-Seitenansicht der Anordnung gemäß Fig. 2 und
- Fig. 5 und 6: schematische Querschnitte zweier bevorzugter Ausführungsformen der Zahnschiene für eine Verstellschienenanordnung gemäß Fig. 1 bis 4, wobei jedoch auf das dort vorgesehene reibungsarme Kunststoffteil verzichtet werden kann.

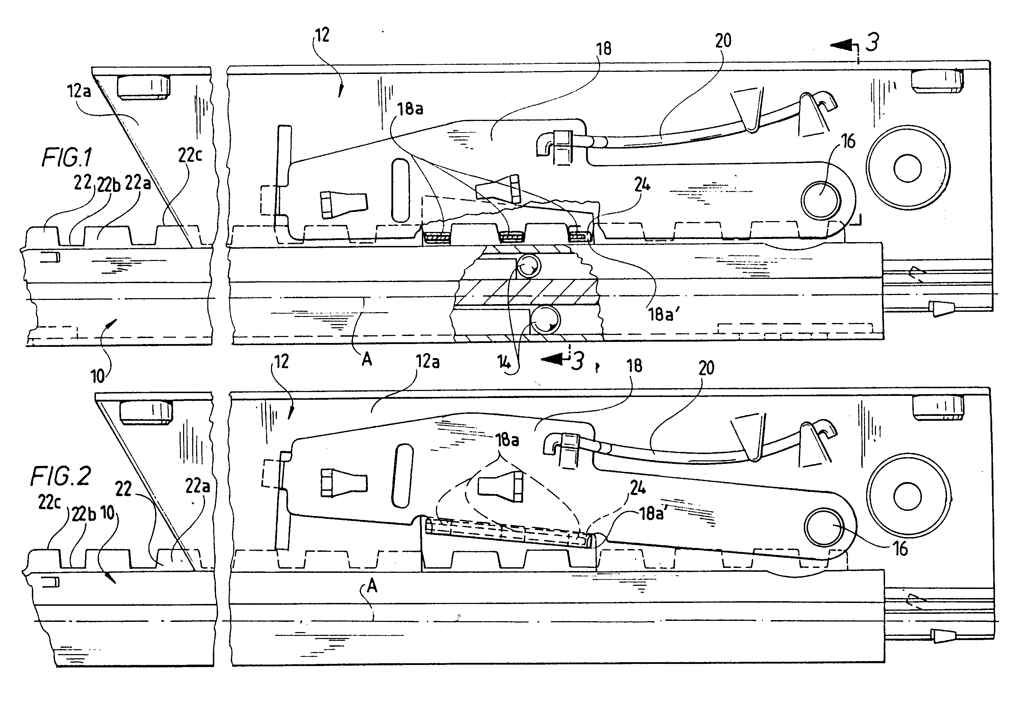

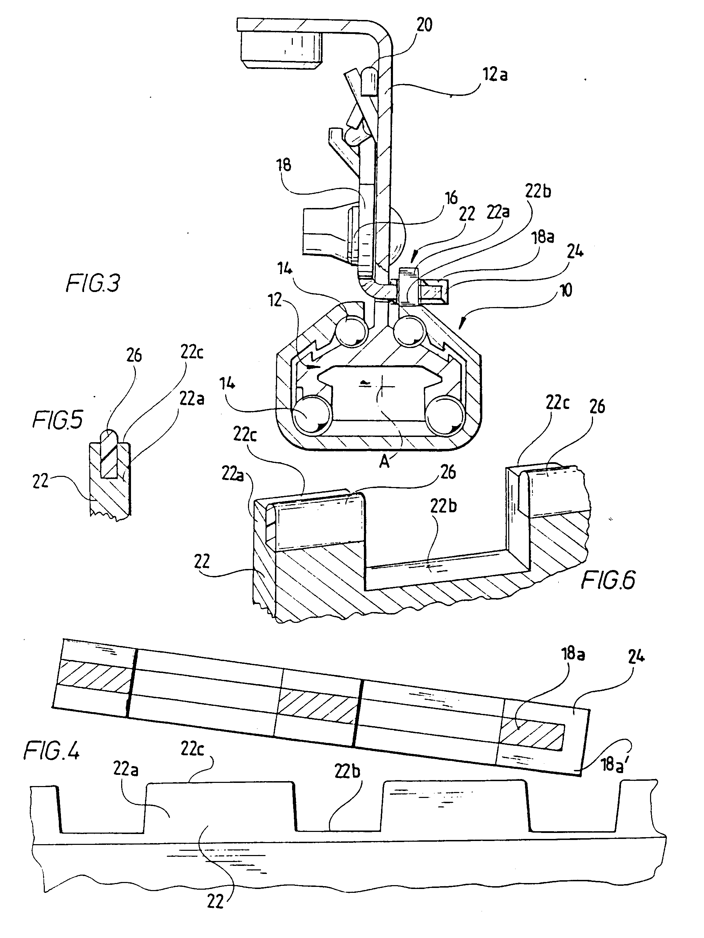

Im einzelnen zeigt Fig. 1, in der einige Teile im Schnitt dargestellt und andere weggebrochen sind, eine Verstellschienenanordnung mit einer im Gebrauch ortsfest am Fahrzeugboden montierten Führungsschiene 10 und einer Gleitschiene 12. Beim Ausführungsbeispiel sind die beiden Schienen 10, 12, wie dies aus Fig. 3 deutlich wird, als Aluminium-Stranggußprofile ausgebildet, die unter Verwendung von Lagerkugeln 14 derart miteinander verbunden sind, daß die Führungsschiene 10 den Basisteil der Gleitschiene umschließt und derart lagert bzw. haltert, daß die Gleitschiene 12 in Richtung der Längsachse A der Führungsschiene 10 verfahrbar bzw. verschiebbar und gegen ein Abheben nach oben zuverlässig gesichert ist. (Die Zeichnungsfiguren 1 bis 4 zeigen die Schienen jeweils in ihrer Einbaulage, und unter Bezugnahme auf diese Einbaulage wird in der vorliegenden Beschreibung mit den Begriffen "oben" und "unten" und ähnlichen Bezeichnungen gearbeitet.)
An einem oder nach oben abstehenden Befestigungsflansch 12a, mit dessen oberem abgewinkelten Ende ein Sitz verschraubt oder in anderer Weise fest verbunden wird, ist mit Hilfe eines Gelenkzapfens 16 ein Arretierhebel 18 angelenkt, der mittels einer kräftigen Spannfeder 20 nach unten, d.h. in Fig. 1 und 2 im Gegenuhrzeigersinn, vorgespannt ist. An dem Arretierhebel 18 sind mehrere, beim Ausführungsbeispiel 3, abgewinkelte Zähne 18a angeformt. Bei verrasteter Verstellschienenanordnung greifen diese Zähne 18a in nach außen bzw. nach oben offene Rastnuten 22b ein, die zwischen den Zähnen 22a einer Zahnleiste 22 der Führungsschiene 10 vorgesehen sind. Die Zahnleiste 22 steht dabei nach oben frei über die restlichen Teile der Führungsschiene 10 vor und verläuft parallel zu dem Befestigungsflansch 12a der Gleitschiene 12. Der verrastete Zustand zwischen den Zähnen 10a des Arretierhebels 18 und den Rastnuten 22b bzw. den Zähnen 22a der Zahnschiene ist in Fig. 1 gezeigt und gewährleistet eine sichere Verriegelung der beiden Schienen 10, 12 gegen eine axiale Längsverstellung und damit eine zuverlässige Fixierung der Lage eines an dem Befestigungsflansch 12a befestigten Sitzes bezüglich des Fahrzeugbodens, mit dem die Führungsschiene 10 fest verbunden ist.

Wenn, ausgehend von der Position gemäß Fig. 1, die axiale Relativlage der beiden Schienen 10 und 12 geändert werden soll, dann wird der Arretierhebel mit Hilfe eines Bedienelements (nicht gezeigt) entgegen der Federwirkung der Spannfeder 20 aus der in Fig. 1 gezeigten Stellung im Uhrzeigersinn in die in Fig. 2 gezeigte Stellung geschwenkt, wobei seine Zähne 18a außer Eingriff mit der Zahnschiene 22 gebracht werden. Nunmehr kann die Gleitschiene 12 relativ zu der Führungsschiene in Richtung der Längsachse A derselben verstellt werden, was in der Praxis bedeutet, daß der mit der Gleitschiene verbundene Sitz (nicht gezeigt) nach vorn oder hinten verstellt wird. Sobald der Benutzer dabei den Eindruck hat, daß sich sein Sitz nunmehr in der richtigen Position befindet, gibt er das Bedienelement frei, so daß der Arretierhebel 18 wieder in Richtung auf die Zahnschiene 22 zurückschwenkt. Da die Zähne 18a und 22a mit engen Toleranzen ineinander greifen, um während der Fahrt, insbesondere aber bei einem Aufprall des Fahrzeugs, jede Relativbewegung zwischen Fahrzeugboden und Sitz zu verhindern, hat dieses Zurückschwenken des Arretierhebels 18 regelmäßig zur Folge, daß der vorderste Zahn 18a des Arretierhebels 18, welcher dem Gelenkzapfen 16 am nächsten benachbart ist, mit seiner Vorderkante 18a′ auf die durch das freie Ende der Zähne 22a der Zahnschiene 22 gebildete, durch die Rastnuten 22b unterbrochene Führungsfläche 22c der Zahnschiene auftrifft. Wenn nunmehr der Sitz nach dem Loslassen des Bedienelements noch geringfügig nach vorn oder hinten verstellt wird, um die Arretierung zum Einrasten zu bringen, dann erzeugt die Vorderkante 18a des auf der Führungsfläche 22c aufliegenden vorderen Zahns 18a an der Führungsfläche normalerweise einen gewissen störenden Abrieb, da die volle Kraft der Spannfeder 20 zwischen der normalerweise scharfen Vorderkante 18a und der quer zur Bewegungsrichtung schmalen Führungsfläche 22c der aus Aluminium bestehenden Führungsschiene 10 wirksam wird.

Dieses Problem der vorbekannten Verstellschienenanordnung wird erfindungsgemäß dadurch vermieden bzw. erheblich verringert, daß auf die Zahnung des Arretierhebels 18 ein Kunststoffteil 24 aufgesetzt wird, welches, wie dies speziell aus Fig. 4 deutlich wird, den vordersten Zahn 18a als U-förmiger Gleitbelag umschließt und bei den übrigen Zähnen 18 jeweils die Vorderseite und die Rückseite bzw. die Oberseite und die Unterseite derselben bedeckt. Dabei versteht es sich, daß die Wandstärke des Kunststoffteils normalerweise relativ gering ist und zumindest im Bereich der Zähne nur etwa 0,2 bis 0,4 mm beträgt, so daß auch bei einer Verformung des Kunststoffmaterials keine Gefahr für ein Herausspringen der Zähne 18a des Arretierhebels 18 aus den Rastnuten 22b der Zahnleiste 22 besteht. Insofern ist die Darstellung gemäß Fig. 4 als schematische Darstellung zu werten, in der die Wandstärke des Kunststoffteils 24 übertrieben dargestellt ist.

Ferner versteht es sich, daß das Kunststoffteil 24 normalerweise mehr oder weniger stark abgerundete freie Kanten aufweisen wird.

Das Kunststoffteil 24 wird, wie eingangs erläutert, im einfachsten Fall nur auf die Zähne 18a des Arretierhebels 18 aufgesteckt und hält sich dort aufgrund einer durch die Formgebung und eine geeignete Elastizität des Materials vorgebbaren Klemmkraft. Ein besserer Schutz gegen einen Verlust bzw. eine Verschiebung des Kunststoffteils 24 wird jedoch dann erreicht, wenn das Kunststoffteil 24 mit den angrenzenden Flächen der Zähne bzw. der benachbarten Basis des Arretierhebels 18 verklebt wird. Zusätzlich können Rastmittel vorgesehen sein, die der Sicherung des Kunststoffteils 24 an dem Arretierhebel 18 sowie der exakten Positionierung des Kunststoffteils 24 dienen.

Aus der Betrachtung der Zeichnungen wird in Verbindung mit der eingangs gegegebenen Erläuterung unmittelbar deutlich, daß durch das Kunststoffteil 24 jeder störende Reibkontakt zwischen der Führungsfläche 22c, der Zahnschiene 22 und den Zähnen 18a des Arretierhebels 18 verhindert wird. Da andererseits die Zahnflanken der Zähne 22a und 18a, abgesehen von der Vorderflanke des vordersten Zahns 18a, nicht mit einer Kunststoffschicht überdeckt sind, wird außerdem die exakte Positionierung der Zähne 18a in den Rastnuten 22b mit engen Toleranzen aufrechterhalten. Bei dem Ausführungsbeispiel gemäß Fig. 1 bis 4 wird also durch ein einziges, dauerhaft mit dem Arretierhebel 18 verbundenes Kunststoffteil 24 auf einfache und preiswerte Weise erreicht, daß in den Kontaktbereichen zwischen den Zähnen 18a und den Elementen 22a, 22b der Zahnleiste 22 ein reibungsarmer Gleitbelag vorhanden ist, der einen unerwünschten Abrieb an der Aluminium-Führungsschiene 10 verhindert.

Wie aus der vorstehenden Beschreibung deutlich wird, kann im wesentlichen derselbe Effekt wie mit dem mit dem Arretierhebel 18 verbundenen Kunststoffteil 24 auch dadurch erzielt werden, daß man ein entsprechendes Kunststoffteil auf die Zähne 22a der Zahnschiene 22 aufsetzt, wobei ein entsprechendes Kunststoffteil ggf. auch zusätzlich zu dem Kunststoffteil 24 vorgesehen sein kann.

Weiterhin besteht die Möglichkeit, mit der Zahnleiste 22 ein stegartiges Kunststoffteil 26 derart zu verbinden, daß dieses leistenförmige Kunststoffteil nach oben über die Stirnfläche der Zähne 22a bzw. über die Führungsfläche 22c vorsteht. Dabei kann das Kunststoffteil 26 in eine Nut der Zahnschiene 22 eingesetzt sein, wie dies in Fig. 5 gezeigt ist, oder in einen seitlich an der Zahnschiene 22 vorgesehenen Falz, wie dies in Fig. 6 gezeigt ist.

Weiterhin soll noch - ohne daß diese Variante in den Zeichnungen eigens dargestellt wird - darauf hingewiesen werden, daß die Erfindung nicht nur bei Verstellschienenanordnungen realisiert werden kann, bei denen der Arretierhebel um eine quer zur Verschieberichtung verlaufende horizontale Achse schwenkbar ist, wie dies bei dem Ausführungsbeispiel gemäß Fig. 1 bis 5 der Fall ist, sondern auch bei solchen Verstellschienenanordnungen, bei denen der Arretierhebel um eine parallel zur Verstellrichtung verlaufende Achse schwenkbar ist und Zähne aufweist, die in geschlossene Öffnungen der Zahnschiene eingreifen, wobei die Stege zwischen den getrennten Öffnungen den Zähnen bei dem vorstehend erläuterten Ausführungsbeispiel entsprechen. Auch in diesem Fall können die Zähne des Arretierhebels von den Elementen eines durchgehenden Kunststoffteils in der Weise umschlossen sein, daß das Metallmaterial der Zähne nicht in direkten Kontakt mit der Seitenfläche der Stege gelangt und dort einen Abrieb verursacht.

## Patentansprüche

1. Verstellschienenanordnung für Kraftfahrzeugsitze und dgl. mit einer ortsfest montierbaren Aluminiumführungsschiene (10) mit einer Zahnleiste (22) mit durch Zahnelemente (22a) voneinander getrennten Rastöffnungen (22b), mit einer an einem Sitz montierbaren, durch die Führungsschiene geführten Gleitschiene (12) und mit Arretiereinrichtungen (16, 18, 20), welche einen aus Stahl bestehenden Arretierhebel (18) umfassen, der um eine quer zur Längsachse (A) der Gleitschiene (12) verlaufende Schwenkachse (Gelenkzapfen 16) schwenkbar an der Gleitschiene (12) befestigt ist, unter einer gegen die Zahnleiste gerichteten Federvorspannung steht und an seiner der Zahnleiste (22) zugewandten Längskante mit abgewinkelten Zähnen (18a) versehen ist, die mit den Rastöffnungen (22b) der Zahnleiste (22) verrastbar und durch Schwenken des Arretierhebels (18) um eine Schwenkachse aus den Rastöffnungen (22b) heraus- und in diese hineinbewegbar sind, um Gleitschiene (12) und Führungsschiene (10) in durch die Zahnteilung der Zahnleiste (22) und der Zähne (18a) des Arretierhebels (18) vorgegebenen axialen Relativstellungen lösbar miteinander zu verrasten,
**dadurch gekennzeichnet,** daß die Zahnelemente (22a) der Zahnleiste (22) und/oder mindestens der der Schwenkachse am nächsten benachbarte vorderste Zahn (18a) des Arretierhebels (18) in einem Kontaktbereich mit einem reibungsarmen Gleitbelag (24) versehen ist.

2. Verstellschienenanordnung für Kraftfahrzeugsitze und dgl. mit einer ortsfest montierbaren Aluminiumführungsschiene mit einer Zahnleiste mit durch Zahnelemente voneinander getrennten Rastöffnungen, mit einer an einem Sitz montierbaren, durch die Führungsschiene geführten Gleitschiene und mit Arretiereinrichtungen, welche einen aus Stahl bestehenden Arretierhebel umfassen, der um eine parallel zur Längsachse der Gleitschiene verlaufende Schwenkachse schwenkbar an der Gleitschiene befestigt ist, unter einer gegen die Zahnleiste gerichteten Federvorspannung steht und an seiner der Zahnleiste zugewandten Längskante mit abgewinkelten Zähnen versehen ist, die mit den Rastöffnungen der Zahnschiene verrastbar und durch Schwenken des Arretierhebels aus den Rastöffnungen heraus- und in diese hineinbewegbar sind, um Gleit- und Führungsschiene in durch die Zahnteilung der Zahnschiene und der Zähne des Arretierhebels vorgegebenen axialen Relativstellungen lösbar miteinander zu verrasten,
**dadurch gekennzeichnet,** daß die Zahnelemente der Zahnleiste und/oder die Zähne des Arretierhebels in einem Kontaktbereich mit einem reibungsarmen Gleitbelag versehen sind.

3. Verstellschienenanordnung nach Anspruch 1 oder 2, dadurch gekennzeichnet, daß der Gleitbelag aus Kunststoff besteht.

4. Verstellschienenanordnung nach Anspruch 3, dadurch gekennzeichnet, daß der Gleitbelag eine Kunststoffkappe umfaßt.

5. Verstellschienenanordnung nach Anspruch 4, dadurch gekennzeichnet, daß die Kunststoffkappe Element eines Kunststoffteils (24) ist, welches Gleitbeläge für mehrere Zähne (18a) umfaßt.

6. Verstellschienenanordnung nach Anspruch 3, dadurch gekennzeichnet, daß der Gleitbelag mit der Zahnleiste (22) verbundene Kunststoffleisten (26) umfaßt, die über die Führungsfläche (22c) der Zahnleiste (22) vorstehen.

7. Verstellschienenanordnung nach Anspruch 3 oder 4, dadurch gekennzeichnet, daß die Kunststoffkappe durch Aufstecken und/oder Verrasten und/oder Verkleben mit dem angrenzenden Bauteil (18, 22) verbunden ist.

8. Verstellschienenanordnung nach Anspruch 1 oder 2, dadurch gekennzeichnet, daß der Gleitbelag durch eine Lackschicht gebildet ist.

9. Verstellschienenanordnung nach Anspruch 8, dadurch gekennzeichnet, daß die Lackschicht durch Pulverbeschichtung mittels eines Kunstharzlackes hergestellt ist.

## Claims

1. Adjustable rail assembly for motor vehicle seats and the like comprising a stationarily mountable aluminium guide rail (10) having a toothed border (22) with locking openings (22b) separated from one another by tooth elements (22a), a slide rail (12) mountable on a seat and guided by the guide rail and catch means (16, 18, 20) comprising a catch lever (18) consisting of steel, said lever being attached to the slide rail (12) for pivoting movement about a pivot axis (hinge pin 16) extending transversely to the longitudinal axis (A) of the slide rail (12), being spring-loaded towards the toothed border and being provided with bent teeth (18a) at its longitudinal edge facing the toothed border (22), said teeth being lockable with the locking openings (22b) of the toothed border (22) and being displaceable into and out of the locking openings (22b) by pivoting of the catch lever (18) about a pivot axis in order to lock slide rail (12) and guide rail (10) releasably with one another in relative axial positions predetermined by the tooth pitch of the toothed border (22) and the teeth (18a) of the catch lever (18),
characterized in that the tooth elements (22a) of the toothed border (22) and/or at least the foremost tooth (18a) of the catch lever (18) most closely adjacent the pivot axis are provided in a contact region with a low-friction slide coating (24).

2. Adjustable rail assembly for motor vehicle seats and the like comprising a stationarily mountable aluminium guide rail having a toothed border with locking openings separated from one another by tooth elements, a slide rail mountable on a seat and guided by the guide rail and catch means comprising a catch lever consisting of steel, said lever being attached to the slide rail for pivoting movement about a pivot axis extending parallel to the longitudinal axis of the slide rail, being spring-loaded towards the toothed border and being provided with bent teeth at its longitudinal edge facing the toothed border, said teeth being lockable with the locking openings of the toothed rail and being displaceable into and out of the locking openings by pivoting of the catch lever in order to lock slide rail and guide rail releasably with one another in relative axial positions predetermined by the tooth pitch of the toothed rail and the teeth of the catch lever,
characterized in that the tooth elements of the toothed border and/or the teeth of the catch lever are provided in a contact region with a low-friction slide coating.

3. Adjustable rail assembly as defined in claim 1 or 2, characterized in that the slide coating consists of plastic.

4. Adjustable rail assembly as defined in claim 3, characterized in that the slide coating comprises a plastic cap.

5. Adjustable rail assembly as defined in claim 4, characterized in that the plastic cap is an element of a plastic part (24) comprising slide coatings for a plurality of teeth (18a).

6. Adjustable rail assembly as defined in claim 3, characterized in that the slide coating comprises plastic strips (26) connected with the toothed border (22) and protruding beyond the guide surface (22c) of the toothed border (22).

7. Adjustable rail assembly as defined in claim 3 or 4, characterized in that the plastic cap is connected with the adjacent component (18, 22) by slipping on and/or interlocking and/or bonding.

8. Adjustable rail assembly as defined in claim 1 or 2, characterized in that the slide coating is formed by a varnish layer.

9. Adjustable rail assembly as defined in claim 8, characterized in that the varnish layer is produced by powder coating by means of a synthetic resin varnish.

## Revendications

1. Agencement de rails de réglage pour sièges de véhicules automobiles et analogues comportant un rail de guidage en aluminium (10) montable de manière fixe, muni d'une bande dentée (22) présentant des ouvertures d'enclenchement (22b) séparées les unes des autres par des éléments de dents (22a), une glissière (12) montable sur un siège et guidée par le rail de guidage, et des dispositifs d'arrêt (16, 18, 20) qui comportent un levier d'arrêt (18) en acier qui est fixé de manière pivotante sur la glissière (12) autour d'un axe de pivotement (pivot 16) qui s'étend transversalement à l'axe longitudinal (A) de la glissière (12), qui est soumis à une prétension par ressort dirigée contre la bande dentée et qui est muni sur son bord longitudinal tourné vers la bande dentée (22) de dents recourbées (18a) qui peuvent s'enclencher avec les ouvertures d'enclenchement (22b) de la bande dentée (22) et qui peuvent pénétrer dans les ouvertures d'enclenchement (22b) et en ressortir par pivotement du levier d'arrêt (18) autour d'un axe de pivotement pour enclencher ensemble de manière amovible la glissière (12) et le rail de guidage (10) dans des positions relatives axiales prédéterminées par le pas de la bande dentée (22) et par les dents (18a) du levier d'arrêt (18), caractérisé en ce que les éléments de dents (22a) de la bande dentée (22) et/ou moins la dent (18a) antérieure du levier d'arrêt (18) la plus proche de l'axe de pivotement sont munis dans un domaine de contact d'un revêtement de glissement (24) de faible frottement.

2. Agencement de rails de réglage pour sièges de véhicules automobiles et analogues comportant un rail de guidage en aluminium montable de manière fixe, muni d'une bande dentée présentant des ouvertures d'enclenchement séparées les unes des autres par des éléments de dents, une glissière montable sur un siège et guidée par le rail de guidage, et des dispositifs d'arrêt qui comportent un levier d'arrêt en acier qui est fixé de manière pivotante sur la glissière autour d'un axe de pivotement (qui s'étend parallèlement à l'axe longitudinal de la glissière, qui est soumis à une prétension par ressort dirigée contre la bande dentée et qui est muni sur son bord longitudinal tourné vers la bande dentée de dents recourbées qui peuvent s'enclencher avec les ouvertures d'enclenchement du rail denté et qui peuvent pénétrer dans les ouvertures d'enclenchement et en ressortir par pivotement du levier d'arrêt pour enclencher ensemble de manière amovible la glissière et le rail de guidage dans des positions relatives axiales prédéterminées par le pas du rail denté et par les dents du levier d'arrêt, caractérisé en ce que les éléments de dents de la bande dentée et/ou les dents du levier d'arrêt sont munis dans un domaine de contact d'un revêtement de glissement de faible frottement.

3. Agencement de rails de réglage selon la revendication 1 ou 2, caractérisé en ce que le revêtement de glissement consiste en matière plastique.

4. Agencement de rails de réglage selon la revendication 3, caractérisé en ce que le revêtement de glissement comporte un capuchon en matière plastique.

5. Agencement de rails de réglage selon la revendication 4, caractérisé en ce que le capuchon en matière plastique constitue un élément d'une pièce en matière plastique (24) qui comporte des revêtements de glissement pour plusieurs dents (18a).

6. Agencement de rails de réglage selon la revendication 3, caractérisé en ce que le revêtement de glissement comporte des bandes en matière plastique (26) reliées à la bande dentée (22) et qui font saillie au-dessus de la surface de guidage (22c) de la bande dentée (22).

7. Agencement de rails de réglage selon la revendication 3 ou 4, caractérisé en ce que le capuchon en matière plastique est relié à la pièce contiguë (18, 22) par emboîtement et/ou enclenchement et/ou collage.

8. Agencement de rails de réglage selon la revendication 1 ou 2, caractérisé en ce que le revêtement de glissement est constitué par une couche de vernis.

9. Agencement de rails de réglage selon la revendication 8, caractérisé en ce que la couche de vernis est obtenue par revêtement de poudre à l'aide d'un vernis de résine synthétique.
